# EUROPEAN PATENT SPECIFICATION

(11) **EP 0 637 269 B1**
(45) Date of publication and mention of the grant of the patent: **06.10.1999**
(21) Application number: 93912033.3
(22) Date of filing: 19.04.1993
(51) Int. Cl.: B07B 1/48

(54) **MOUNTING AND TENSIONING ARRANGEMENTS FOR SCREENS**
MONTIER- UND SPANNVORRICHTUNG FÜR SIEBE
APPAREILS POUR MONTER ET TENDRE DES TAMIS

(30) Priority: 21.04.1992 GB 9208629
(43) Date of publication of application: 08.02.1995
(73) Proprietor: ALFA-LAVAL SEPARATION AB, 147 80 Tumba (SE)
(72) Inventor: BJÖRKLUND, Ola Alfa Laval Oilfield Ltd., Brentford, Middlesex TW8 9BT (GB); RITCHIE, Alexander 3 Kinmonth Road, Kincardineshire AB3 2YF (GB); SOUTER, George, Peterculter Aberdeen AB1 2NN (GB)
(74) Representative: Stokes, Graeme Wilson
(86) International application number: SE9300340
(87) International publication number: WO9320954

(56) References cited:
- GB-A- 1 258 995
- GB-A- 2 161 715
- GB-A- 2 176 424
- US-A- 1 879 377
- US-A- 2 378 463
- US-A- 3 381 820
- US-A- 4 568 455
- DERWENT'S ABSTRACT, No. 85-85898/14, week 8514; & SU,A,1114481 (GIPROMASHUGLEOBOGAS), 23 Sept 1984 (23.09.84).

## Description

This invention relates to screens and to screen mounting and tensioning arrangements in screening apparatus for use, for example, in the separation of solids from a slurry.

Hereafter in this specification, including the appended claims, the following expressions have the meanings ascribed, thus "screening apparatus" is a general reference to an entire or complete machine; "screen assembly" refers to a sub-assembly of a screening apparatus and envisages a screen unit together with a supporting and/or carrying structure therefor which may be withdrawable from the screening apparatus; and "screen unit" is a mesh material fixed directly to frame or supporting members.

Vibratory screening apparatus is used in the treatment of oil well drilling minds in order to remove and discharge cuttings and to reclaim the liquid. Presently proposed such apparatus has an upper relatively coarse mesh screen assembly and a lower relatively fine mesh screen assembly. Both of these screen assemblies are vibrated and both may be mounted in a common carrying structure or "basket" with a common vibrating means. In the context of drilling mud reclamation, the present invention is concerned particularly with a fine mesh screen assembly and a screen unit therefor.

In US Patent Specification No. 1879377 (McNeely), principal considerations for the construction and operation of a fine mesh screen unit are described, and teach that the fine mesh material be sufficiently and evenly tensioned and provided with support or backing which support or backing should be distributed throughout the area of the mesh material and should also be unitary with the mesh material. Thus, McNeely describes a screen unit comprising a pretensioned fine mesh material brought into contact with and fixed to a pretensioned coarse mesh or grid. Similar concepts are taught in UK Patent Specification No. 2161715 (Bailey). In both McNeely and Bailey, the pretension in the fine mesh material is maintained by the backing or support. Disadvantages of this arrangement are that a fine mesh material being somewhat fragile is vulnerable to accidental damage whilst under tension; moreover, the quality of tensioning in respect of degree and/or evenness can deteriorate during storage due to "creep" in the mesh material; and also, once the screen unit has been manufactured, on-site or user-adjustment of the tension in the mesh material is not feasible.

In US Patent Specification No. 4457839 (Bailey) a lower or bottom screen assembly within the main structure of a vibratory screening apparatus has a support frame which is withdrawable in the fore-and-aft direction to receive a screen unit comprising a pretensioned mesh material fixed to a frame. Fitting or changing the screen unit can with Bailey's arrangement be accomplished quickly, and pressure fluid clamps located within the main structure are operable to act on the screen assembly when the support frame and screen unit are pushed in to enable coupling of these parts to the vibrator means. However, this screening apparatus relies upon the pretension in the fine mesh material and therefore offers no solution to the mentioned disadvantages.

In US Patent Specification No. 4568455 (Huber at al) it is proposed to fix a mesh material to an inflatable frame which is secured in a rigid support and locked therein by inflating the frame and simultaneously tensioning the mesh material, however, this tension is not subsequently adjustable; and the proposals provide no distributed support for the mesh material as taught by McNeely. US Patent Specification No. 3176843 (Hoskins et al) also proposes an inflatable frame with a mesh material having edge portions thereof wrapped around the frame members so that the mesh material is tensioned to a desired tension value upon inflation of the frame. Thus, Hoskins et al envisages in-situ adjustment of tension, but provides no distributed support for the mesh material. The Hoskins et al proposal prima facie present difficulty in arranging the mesh material to ensure even tensioning thereof.

GB-A-1 258 995 describes a sieve base provided with a sleeve liner of plastics material clamped at intervals to tension suspension tackle of rigid but yielding material, such as steel strips. In the untensioned state the suspension tackle lies in an arched arrangement relative to the sieve liner, and upon tensioning the sieve liner is extended to the length of the suspension tackle.

An object of the present invention is to provide in or for screening apparatus, screen mounting and tensioning arrangements whereby the mentioned disadvantages are obviated or mitigated.

According to the present invention, there is provided a screen assembly comprising a screen unit releasably mounted on a relatively rigid support means, the screen unit having a sheet of mesh material engaged with a grid means maintaining tautness of the sheet of mesh material, the grid means defining a latticed surface all of which is bonded to the sheet of mesh material; characterised in that the grid means is yieldable at least in the plane of said latticed surface to permit relaxation of the sheet of mesh material upon release of the screen unit from the support means.

In the screen assembly according to the present invention, the support means provides substantially rigid support for the screen unit in which the grid means distributes such support over the area of the sheet of mesh material; and at the same time the tension in the sheets of mesh material can be applied or adjusted taking advantage of the relative yieldability of the grid means which can follow the mesh material by virtue of a sliding contact with the support means or whilst the grid means is temporarily lifted out of contact with the support means.

Further, according to the present invention, there is provided a screen unit for a screen assembly as aforesaid, comprising a sheet of mesh material fixed to a grid means, the latter defining a latticed surface all of which is bonded to the sheet of mesh material; characterised in that the grid means is yieldable at least in the plane of said latticed surface to permit the sheet of mesh material to relax.

In accordance with the present invention, the choice of a yieldable material in this context means that when the mesh material has been fixed to the grid means and released from a tensioning means, the yieldable characteristic of the grid means allows the mesh material to relax. Thus, the inventive screen unit is less vulnerable to damage and\or less liable to deterioration of tensioning quality whilst the screen unit is in storage or in transit. Moreover, because the inventive screen unit is tension-adjustable, the mesh material need not during manufacture of the screen unit be fully tensioned but need only be evenly taut when fixed to the grid means. It is preferable that the said yieldable material should also have a resilient or elastic property so that the grid means made of this material can yield without substantial buckling or distortion to both increasing and decreasing tension of the mesh material.

Preferably, the screen unit includes substantially rigid side members defining a frame, and the grid means engages these side members which are mutually relatively shiftable in said generally horizontal direction.

The rigid side members, by virtue of being mutually relatively shiftable, do not prevent relaxation of the mesh material and the grid means, but provide a means of transmitting, evenly, tension back into the mesh material.

An embodiment of the present invention will now be described, by way of example, with reference to the accompanying drawings, in which:-
Fig. 1 is a perspective view of vibratory screening apparatus showing part of a lower fine mesh screen assembly partially withdrawn;
Fig. 2 is a perspective view of part of a fine mesh screen assembly from Fig. 1;
Fig. 3 is a plan view of a screen unit in accordance with the present invention;
Fig. 4 is a cross-sectional view on the line IV-IV in Fig. 3 and to a larger scale than Fig. 3;
Fig. 5 is a cross-sectional elevation of part of a fine mesh screen assembly in accordance with the present invention;
Fig. 6 is a partly diagrammatic sectional view of part of the screen assembly of Fig. 2 on the line VI-VI in Fig. 2; and
Fig. 7 is a partly diagrammatic sectional view of part of the screen assembly of Fig. 2 on the line VII-VII in Fig. 2.

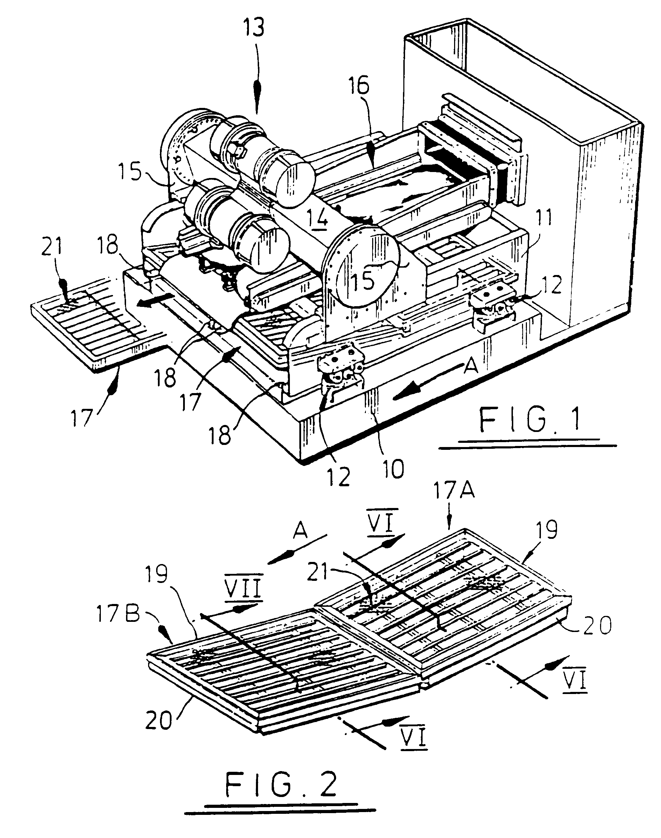

In Fig 1 of the drawings, vibratory screening apparatus consists of a base structure 10 on which is mounted a carrier structure or "basket" 11 using mountings 12 adapted to permit the basket 11 to be vibrated relative to the base structure 10. The vibratory action of the basket 11 is by means of vibrator motors 13 mounted on a cross beam 14 secured to the basket 11 by means of side plate structures 15.

The basket 11 carries a generally horizontal upper screen assembly 16 featuring a relatively coarse mesh material; and two generally horizontal lower screen assemblies 17 arranged side-by-side and featuring relatively fine mesh material. In fact, the screen assemblies 17 each comprise two screen assemblies 17A and 17B which are mutually hinged end-to-end as shown in Fig. 2. The fore-and-aft or feed direction for the vibratory screening apparatus is represented by arrow A in Figs. 1 and 2. The screen assemblies 17 are withdrawable from the screening apparatus by sliding on ledges 18 defined by the structure of the basket 11. When the screen assemblies 17 are pushed into the basket 11, each rear screen assembly 17A is clamp-engaged with the associated ledges 18; and each front screen assembly 17B can be shifted up and down about the hinge connection with its rear screen assembly for the purpose of altering the slope or operating angle of the front screen assembly. At any chosen slope configuration, each front screen assembly 17B may be clamp-engaged with the vertical or upright side member of the basket 11 as is described in further detail later herein. The angle of a front screen assembly determines the depth of the pool of material on the rear screen assembly which influences the screening action in known manner.

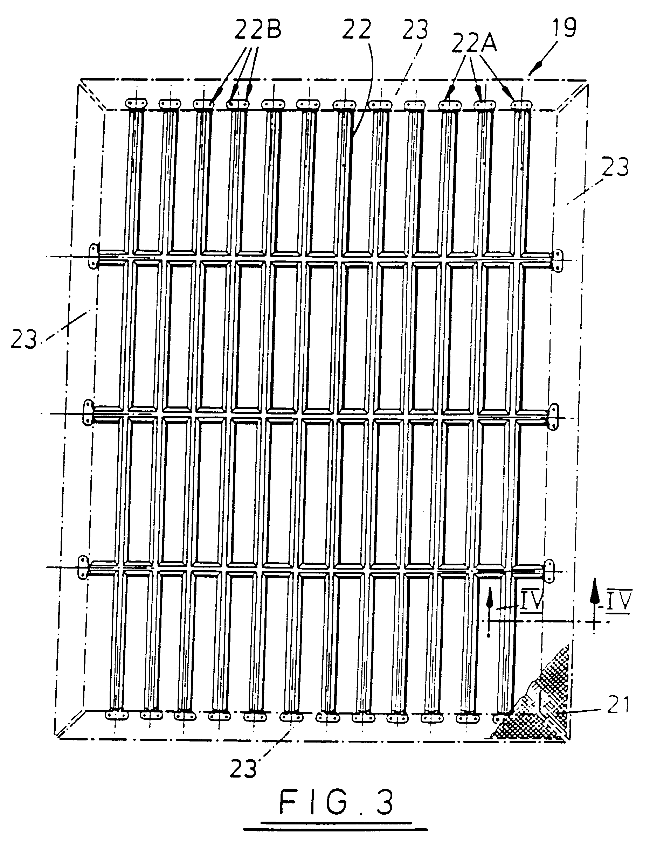

Each screen assembly 17A, 17B consists of a removable screen unit 19 and a support means in the form of a grid/frame construction 20. These parts 19, 20 and their manner of operation will now be described more fully with reference to figs. 3 to 7.

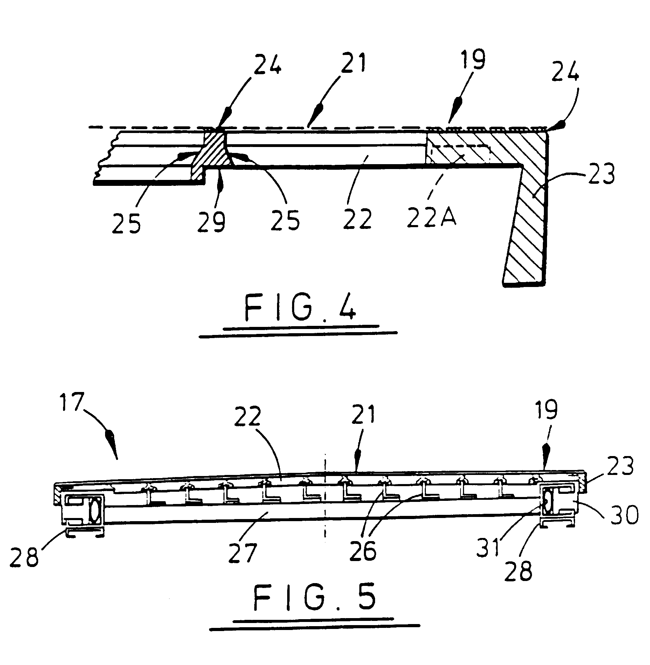

In Figs. 3 and 4, the screen unit 19 consists of a rectangular sheet 21 of mesh material fixed to a grid means 22 in the form of a lattice moulded from a yieldable and resilient or elastic material for example a hard rubber compound. The lattice 22 is moulded without any peripheral frame, and the free ends of the lattice members define lug elements 22A which are received in appropriately shaped recesses in relatively rigid side members 23 which form a (first) frame of the screen unit 19. The lug elements 22A are engaged with anchor pins 22B which are set into the side members 23 and extend through holes in the lug elements 22A, and a cement is used to keep the lug elements in their recesses. As can be seen in Fig. 3, each of the side members 23 has a mitred end-configuration; and it is essential that the side members 23 are mutually free each from the others at least to allow these side members to be mutually relatively shiftable in the generally horizontal direction. In a modification within the scope of the appended claims, for example, these side members are mutually inter-engaged by tongue-and-slot means, instead of being simply mitred, to restrain undesirable mis-alignment in the general plane of the screen unit.

In the manufacture of the screen unit 19, the sheet 21 of mesh material is first made evenly taut fin a framing jig (not shown) in known manner. The lattice 22 together with the attached side members 23 are arranged on a second jig so that the lattice and the side members are respectively flat and in rectangular configuration. A bonding compound or adhesive 24 (see Fig. 4) is then applied to the top latticed surface of the lattice 22 and to the top surfaces of the side members 23 and then the taut mesh material 21 is brought into contact with the adhesive on the lattice and on the side members and held until the bonding compound or adhesive 24 has set. Thereafter, the mesh material 21 is released whereupon the mutual independence of the side members 23 and the yieldability of the lattice 22 permits the mesh material 21 to relax.

It will be noted that the rectangular windows or panels defined by the lattice 22 feature chamfered surfaces 25 which provide seating for repair insert panels (not shown) which may be inserted and bonded in place after cutting away a damaged window panel of the mesh material 21. Each of the side members 23 is made of a metal such as an aluminium alloy, or from a plastics material suitably reinforced to obtain the requisite rigidity. It will be noted that the upright leg of each side member 23 defines a tapered configuration the purpose of which becomes apparent later herein.

In Fig. 5, the screen unit 19 is shown mounted on a support means comprising a grid and a (second) frame. This grid is of relatively rigid construction and consists of a set of mutually parallel support bars 26 which extend in the fore-and-aft direction and are mounted on cross members 27 secured rectangular (second) frame 28. The fore-and-aft members of the lattice 22 define channels 29, and the lateral spacing of these lattice members corresponds with the lateral spacing of the support bars 26 so that the top edges of these support bars are embraced by the channels 29 thus providing a sliding contact interface between the yieldable grid means of the screen unit 19 and the rigid grid of the support means 20. As can be seen in Fig. 5, the support bars 26 vary slightly in height to a maximum near the centre of the screen unit 19 so that the rigid grid defines a configuration which is convex towards the screen unit 19. The convex configuration assists in maintaining contact between the middle portion of the screen unit 19 and the respective support bars 26 during vibratory action.

The frame 28 incorporates shiftable tensioning elements 30 which engage the insides of the side members 23. Several such tensioning elements 30 are provided along each side of the frame 28 and are associated with first actuating means in the form of elongate pneumatic bladders 31 provided one for each side of the frame 28 and all connected by way of an operating valve 32 to a common source of pneumatic pressure 33. Thus, inflation of the bladders 31 causes extension of the tensioners 30 which simultaneously effects tensioning of the mesh material 21 and locks the screen unit 19 in position by means of the tapered configuration of the side members 23. It will be understood that the bladders 31 are inflated once the screen assemblies 17 have been pushed into the basket 11. Also, it will be understood that the lattice 22 yields to the movement of the relatively rigid side members 23 allowing the mesh material 21 to resume the evenly taut condition pertaining at the time of manufacture of the screen unit 19. Moreover, the evenness or quality of tensioning is maintained for increased tension values obtained by increasing pressure in the bladders 31.

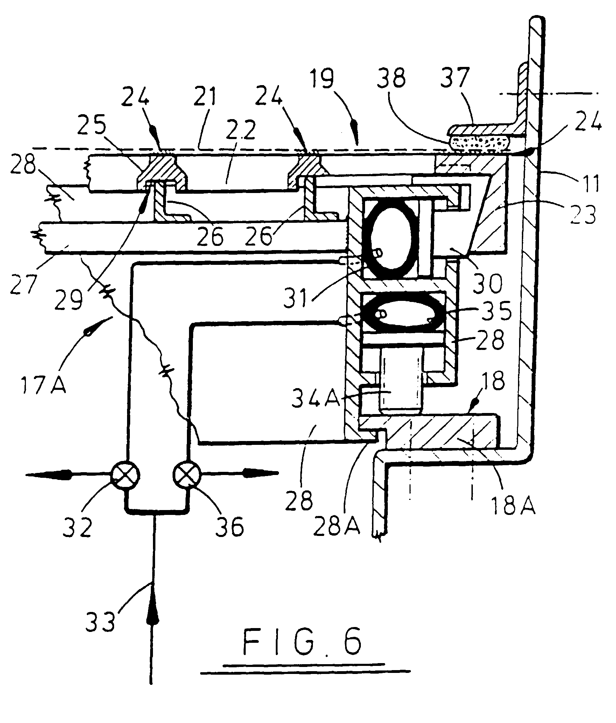

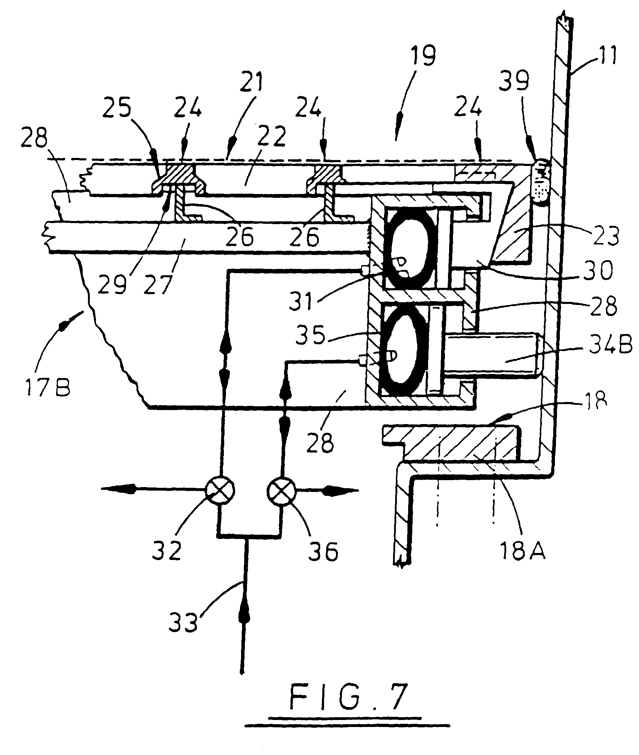

In order to provide coupling of the screen assemblies 17 to the basket 11 so that vibratory action is transmitted to the screen assemblies, the frame 28 further incorporates shiftable clamp elements 34A (Fig. 6) and 34B (Fig. 7). As mentioned in the foregoing description, the rear screen assemblies 17A are clamped to the ledges 18 of the basket 11; and the forward screen assemblies 17B are clamped to the upright side portions of the basket 11. Thus, in Fig. 6 the frame 28 is provided with a lip 28A for engagement with an edge portion of a slide rail 18A which is secured in the basket 11 and defines the ledge 18. Several of the clamp elements 34A are provided in each laterial member of the frame 28 and project downwards therefrom for engagement with the ledge surface 18 to provide a clamp action in conjunction with the lip 28A. The clamp elements 34A are operated, in each laterial side member of the frame 28, by a common second actuator means in the form of a pneumatic bladder 35 connected to the pressure source 33 by way of a control valve 36. The control valves 32, 36 are operable to feed and exhaust the respective bladders 31 and 35. In Fig. 7, the clamp elements 34B are operated similarly to the clamp elements 34A in Fig. 6 except that the clamp elements 34B project laterally for engagement with the side wall of the basket 11 at any position thereon when the angle of the front or forward screen assembly has been set as desired.

During vibratory screening action, it is desirable to impede flow of materials around the sides of the screen units 19. To this end, for the rear screen assemblies 17A, the basket 11 is provided with inwardly extending abutment rails 37 and resilient sealing strips 38 respectively positioned and dimensioned so that when the clamp elements 34A are operative, the edge portions of the screen unit 19 compress the sealing strips 38. For the forward screen assemblies 17B, resilient sealing strips 39 are provided to close the gaps between the side walls of the basket 11 and the adjacent sides of the screen unit 19.

## Claims

1. A screen assembly comprising a screen unit (19) releasably mounted on a relatively rigid support means (20), the screen unit (19) having a sheet (21) of mesh material engaged with a grid means (22) maintaining tautness of the sheet (21) of mesh material, the grid means (22) defining a latticed surface all of which is bonded to the sheet of mesh material; characterised in that the grid means (22) is yieldable at least in the plane of said latticed surface to permit relaxation of the sheet (21) of mesh material upon release of the screen unit (19) from the support means (20).

2. A screen assembly according to claim 1; characterised in that there is a sliding contact between the support means (20) and the gird means (22).

3. A screen assembly according to claim 1 or claim 2; characterised in that the grid means (22) is made of a material having a resilient or elastic property.

4. A screen assembly according to claim 1 or claim 2; characterised in that the grid means (22) is made of a hard rubber.

5. A screen assembly according to any one of the preceding claims; characterised in that the grid means (22) and the sheet (21) of mesh material together define a rectangular configuration in plan view, that along the sides of said configuration the grid means (22) engages substantially rigid side members (23) defining a first frame, and that these side members (23) are mutually relatively shiftable in said directions.

6. A screen assembly according to claim 5; characterised in that the sheet (21) of mesh material is fixed to each of the side members (23).

7. A screen assembly according to claim 5 or claim 6; characterised in that the support means (20) comprises a second frame (28) of rectangular configuration similar to that of the said first frame, that said side members (23) are arranged around said second frame (28), that the second frame (28) incorporates shiftable tensioning elements (30) engaging said side members (23), and that these tensioning elements (30) are associated with first actuating means (31) operable to shift these tensioning elements (30) to vary tension in the screen unit.

8. A screen assembly according to claim 7; characterised in that the said second frame (28) incorporates shiftable clamp elements (34A, 34B) associated with second actuating means (35) operable to shift the clamp elements (34A, 34B) for engaging and disengaging a carrying structure (11) of a screening apparatus.

9. A screen assembly according to claim 8; characterised in that the first (31) and second (35) actuating means are mutually independently operable pneumatic actuating means.

10. A screen assembly according to any one of the preceding claims; characterised in that a contact interface between the support means (20) and the grid means (22) defines a configuration which is convex towards the sheet (21) of mesh material.

11. Vibratory screening apparatus characterised by incorporating a screen assembly according to any one of the preceding claims.

12. Vibratory screening apparatus characterised by incorporating two screening assemblies (17A, 17B) each according to any one of claims 1 to 10, and in that these assemblies are mutually hinged end-to-end with respect to the fore-and-aft direction (A) of the apparatus.

13. Screen unit (19) for a screen assembly according to any one of claims 1 to 10, comprising a sheet (21) of mesh material fixed to a grid means (22), the latter defining a latticed surface all of which is bonded to the sheet (21) of mesh material; characterised in that the grid means (22) is yieldable at least in the plane of said latticed surface to permit the sheet (21) of mesh material to relax.

14. A screen unit according to claim 13; characterised by including substantially rigid side members (23) which are disposed to define a frame and which are mutually relatively shiftable in said directions, and in that the grid means (22) engages these side members (23).

15. A screen unit according to claim 14; characterised in that the sheet (21) of mesh material is fixed to each of said side members (23).

## Patentansprüche

1. Siebbaugruppe, die eine Siebeinheit (19) umfaßt, die abnehmbar auf einem verhältnismäßig starren Stützmittel (20) montiert ist, wobei die Siebeinheit (19) eine Lage (21) Siebmaterial hat, die mit einem Gittermittel (22) ineinandergreift, das die Straffheit der Lage (21) des Siebmaterials aufrechterhält, wobei das Gittermittel (22) eine gitterförmige Oberfläche bildet, die insgesamt mit der Lage des Siebmaterials verbunden ist, dadurch gekennzeichnet, daß das Gittermittel (22) wenigstens in der Ebene der gitterförmigen Oberfläche nachgebend ist, um die Entspannung der Lage (21) des Siebmaterials nach der Abnahme der Siebeinheit (19) von dem Stützmittel (20) zu ermöglichen.

2. Siebbaugruppe nach Anspruch 1, dadurch gekennzeichnet, daß zwischen dem Stützmittel (20) und dem Gittermittel (22) Gleitkontakt besteht.

3. Siebbaugruppe nach Anspruch 1 oder Anspruch 2, dadurch gekennzeichnet, daß das Gittermittel (22) aus einem Material hergestellt wird, das federnde oder elastische Eigenschaften hat.

4. Siebbaugruppe nach Anspruch 1 oder Anspruch 2, dadurch gekennzeichnet, daß das Gittermittel (22) aus einem Hartgummi hergestellt wird.

5. Siebbaugruppe nach einem der vorhergehenden Ansprüche, dadurch gekennzeichnet, daß das Gittermittel (22) und die Lage (21) des Siebmaterials in der Draufsicht zusammen eine rechteckige Konfiguration bilden, daß das Gittermittel (22) längs der Seiten der Konfiguration mit im wesentlichen starren Seitengliedern (23) ineinandergreift, die einen ersten Rahmen bilden, und daß diese Seitenglieder (23) gegenseitig relativ verschiebbar in den genannten Richtungen sind.

6. Siebbaugruppe nach Anspruch 5, dadurch gekennzeichnet, daß die Lage (21) des Siebmaterials an jedem der Seitenglieder (23) befestigt ist.

7. Siebbaugruppe nach Anspruch 5 oder Anspruch 6, dadurch gekennzeichnet, daß das Stützmittel (20) einen zweiten Rahmen (28) von rechteckiger Konfiguration ähnlich der des ersten Rahmens umfaßt, daß die Seitenglieder (23) um den zweiten Rahmen (28) angeordnet sind, daß der zweite Rahmen (28) verschiebbare Spannelemente (30) einbezieht, die mit den Seitengliedern (23) ineinandergreifen, und daß diese Spannelemente (30) einem ersten Betätigungsmittel (31) zugeordnet sind, das betätigt werden kann, um diese Spannelemente (30) zur Veränderung der Spannung in der Siebeinheit zu verschieben.

8. Siebbaugruppe nach Anspruch 7, dadurch gekennzeichnet, daß der zweite Rahmen (28) verschiebbare Klemmelemente (34A, 34B) einbezieht, die einem zweiten Betätigungsmittel (35) zugeordnet sind, das betätigt werden kann, um die Klemmelemente (34A, 34B) zum Einklinken in eine oder Ausklinken aus einer Tragestruktur (11) einer Siebvorrichtung zu verschieben.

9. Siebbaugruppe nach Anspruch 8, dadurch gekennzeichnet, daß das erste (31) und zweite (35) Betätigungsmittel voneinander unabhängig zu betreibende pneumatische Betätigungsmittel sind.

10. Siebbaugruppe nach einem der vorhergehenden Ansprüche, dadurch gekennzeichnet, daß eine Kontaktgrenzfläche zwischen dem Stützmittel (20) und dem Gittermittel (22) eine Konfiguration bildet, die zur Lage (21) des Siebmaterials hin konvex ist.

11. Schwingsiebvorrichtung, gekennzeichnet durch die Einbeziehung einer Siebbaugruppe nach einem der vorhergehenden Ansprüche.

12. Schwingsiebvorrichtung, gekennzeichnet durch die Einbeziehung von zwei Siebbaugruppen (17A, 17B), jeweils nach einem der Ansprüche 1 bis 10, und dadurch, daß diese Baugruppen gegenseitig endweise im Verhältnis zur Längsrichtung (A) der Vorrichtung gelenkig befestigt sind.

13. Siebeinheit (19) für eine Siebbaugruppe nach einem der Ansprüche 1 bis 10, die eine Lage (21) Siebmaterial umfaßt, die an einem Gittermittel (22) befestigt ist, wobei letztere eine gitterförmige Oberfläche bildet, die insgesamt mit der Lage (21) des Siebmaterials verbunden ist, dadurch gekennzeichnet, daß das Gittermittel (22) wenigstens in der Ebene der gitterförmigen Oberfläche nachgebend ist, damit sich die Lage (21) des Siebmaterials entspannen kann.

14. Siebeinheit nach Anspruch 13, gekennzeichnet durch die Einbeziehung von im wesentlichen starren Seitengliedern (23), die so angeordnet sind, daß sie einen Rahmen bilden, und die gegenseitig relativ verschiebbar in den genannten Richtungen sind, und dadurch, daß das Gittermittel (22) mit diesen Seitengliedern (23) ineinandergreift.

15. Siebeinheit nach Anspruch 14, dadurch gekennzeichnet, daß die Lage (21) des Siebmaterials an jedem der Seitenglieder (23) befestigt ist.

## Revendications

1. Assemblage de tamis comprenant une unité de tamis (19), montée de façon amovible sur un moyen de support relativement rigide (20), l'unité de tamis (19) comportant une plaque (21) de matériau à mailles engagée dans un moyen de grille (22), maintenant la tension de la plaque (21) de matériau à mailles, le moyen de grille (22) définissant une surface à treillis, reliée entièrement à la plaque de matériau à mailles; caractérisé en ce que le moyen de grille (22) est élastique, du moins dans le plan de ladite surface à treillis, pour permettre la détente de la plaque (21) de matériau à mailles lors de la libération de l'unité de tamis (19) du moyen de support (20).

2. Assemblage de tamis selon la revendication 1, caractérisé en ce qu'il existe un contact coulissant entre le moyen de support (20) et le moyen de grille (22).

3. Assemblage de tamis selon les revendications 1 ou 2, caractérisé en ce que le moyen de grille (22) est composé d'un matériau présentant une propriété résiliente ou élastique.

4. Assemblage de tamis selon les revendications 1 ou 2, caractérisé en ce que le moyen de grille (22) est composé de caoutchouc dur.

5. Assemblage de tamis' selon l'une quelconque des revendications précédentes, caractérisé en ce que le moyen de grille (22) et la plaque (21) de matériau à mailles définissent ensemble une configuration rectangulaire dans une vue en plan, en ce que le moyen de grille (22) s'engage le long des côtés de ladite configuration de manière pratiquement rigide dans les éléments latéraux (23), définissant un premier cadre, et en ce que lesdits éléments latéraux (23) peuvent être déplacés les uns par rapport aux autres dans lesdites directions.

6. Assemblage de tamis selon la revendication 5, caractérisé en ce que la plaque (21) de matériau à mailles est fixée à chacun des éléments latéraux (23).

7. Assemblage de tamis selon les revendications 5 ou 6, caractérisé en ce que le moyen de support (20) comprend un deuxième cadre (28) de configuration rectangulaire, similaire à celle dudit premier cadre, en ce que lesdits éléments latéraux (23) sont agencés autour dudit deuxième cadre (28), en ce que le deuxième cadre (28) comprend des éléments tendeurs pouvant être déplacés (30) et s'engageant dans lesdits éléments latéraux (23), et en ce que ces éléments tendeurs (30) sont associés à des premiers moyens d'actionnement (31), destinés à déplacer lesdits éléments tendeurs (30) pour varier la tension dans l'unité de tamis.

8. Assemblage de tamis selon la revendication 7, caractérisé en ce que ledit deuxième cadre (28) comprend des éléments de brides de fixation pouvant être déplacés (34A, 34B), associés à des deuxièmes moyens d'actionnement (35), destinés à déplacer les éléments de brides de fixation (34A, 34B) en vue de l'engagement dans une structure porteuse (11) d'un dispositif à tamiser et du dégagement de celle-ci.

9. Assemblage de tamis selon la revendication 8, caractérisé en ce que les premier (31) et deuxième (35) moyens d'actionnement sont des moyens d'actionnement pneumatiques à actionnement indépendant.

10. Assemblage de tamis selon l'une quelconque des revendications précédentes, caractérisé en ce qu'une interface de contact entre le moyen de support (20) et le moyen de grille (22) définit une configuration convexe en direction de ladite plaque (21) de matériau à mailles.

11. Dispositif à tamiser à vibrations, caractérisé en ce qu'il comprend un assemblage de tamis selon l'une quelconque des revendications précédentes.

12. Dispositif à tamiser à vibrations, caractérisé en ce qu'il comprend deux assemblages de tamis (17A, 17B), chacun étant conforme à l'une quelconque des revendications 1 à 10, et en ce que ces assemblages sont articulés mutuellement bout-à-bout par rapport à la direction allant vers l'avant et l'arrière (A) du dispositif.

13. Unité de tamis (19) pour un assemblage de tamis selon l'une quelconque des revendications 1 à 10, comprenant une plaque (21) de matériau à mailles fixée à un moyen de grille (22), cette dernière définissant une surface à treillis, reliée entièrement à la plaque (21) de matériau à mailles; caractérisée en ce que le moyen de grille (22) est élastique, du moins dans le plan de ladite surface à treillis, pour permettre la détente de la plaque (21) de matériau à mailles.

14. Unité de tamis selon la revendication 13, caractérisée en ce qu'elle englobe des éléments latéraux pratiquement rigides (23), agencés de sorte à définir un cadre et pouvant être déplacés les uns par rapport aux autres dans lesdites directions, et en ce que le moyen de grille (22) s'engage dans ces éléments latéraux (23).

15. Unité de tamis selon la revendication 14, caractérisée en ce que la plaque (21) de matériau à mailles est fixée à chacun desdits éléments latéraux (23).
